# EUROPEAN PATENT SPECIFICATION

(11) **EP 1 801 358 B1**
(45) Date of publication and mention of the grant of the patent: **11.03.2009**
(21) Application number: 06126632.6
(22) Date of filing: 20.12.2006
(51) Int. Cl.: F01D 11/00, F01D 11/12, F16J 15/44

(54) **Methods for coupling honeycomb seals to gas turbine engine components**
Verfahren zum Ankoppeln von Wabendichtungen an Gasturbinenmotorkomponenten
Procédé pour assembler un dispositif d'étanchéité en nid d'abeille à des composants de moteurs de turbine à gaz

(30) Priority: 20.12.2005 US 312868
(43) Date of publication of application: 27.06.2007
(73) Proprietor: GENERAL ELECTRIC COMPANY, Schenectady, NY 12345 (US)
(72) Inventor: Ahti, Robert Allan, Hillsborough, NH 03244 (US); Alexander, Albert Arthur, Springvale, MA 04083 (US); Campbell, Alexander Kenneth, Boscawen, NH 03303 (US)
(74) Representative: Illingworth-Law, William Illingworth

(56) References cited:
- EP-A- 1 008 725
- FR-A- 2 653 366
- US-A1- 4 395 195

## Description

### BACKGROUND OF THE INVENTION

This invention relates generally to gas turbine engines and, more particularly, to methods and apparatus for coupling honeycomb seals to gas turbine engine components.

Honeycomb seals are widely used in gas turbine engine applications. For example, at least some known gas turbine engines include at least one row of rotor blades that is radially inward from a plurality of honeycomb seals within cavities formed within a surrounding stator vane assembly. At least some known honeycomb materials are installed into a gas turbine engine via a manual crimping process to fixed vane sector components, for example. During break-in engine operations, seal teeth located on a first rotable annular member cut grooves or channels into the honeycomb seals located on a second member having a different rotational speed than that of the first member. The channels cut by the seal teeth define an operating clearance between the seal teeth and the honeycomb material, and permit the honeycomb material to substantially prevent air from flowing between the honeycomb material and the first member.

During assembly of at least some known honeycomb seals, the seals are manually crimped into the fixed vane sector components using a hammer and a non-marring nylon block that impacts the honeycomb seal. More specifically, often it requires repeated blows from the hammer before the honeycomb seal is fixed in position across the length of the honeycomb seal track. However, repeated hammering across the honeycomb seal track may damage the honeycomb or the seal track, may increase the risk of hammer blow pinch, and/or may limit the useful life expectancy of the honeycomb seal. One such arrangement is shown in EP 1 008 725

### BRIEF DESCRIPTION OF THE INVENTION

According to the invention, there is provided a method for assembling a gas turbine engine, said method comprising providing a vane sector including a radially inward portion and at least one retaining track member coupled to the radially inward portion wherein the at least one retaining track member includes a first portion that is substantially perpendicular to the radially inward portion and a second portion that is substantially perpendicular to the first portion and is substantially parallel to the radially inward portion; providing a honeycomb seal including a sealing portion and a seal track; and coupling the honeycomb seal to the vane sector utilizing an hydraulic tool by crimping the at least one retaining track member using the hydraulic tool to facilitate positioning the retaining track member second portion at an acute angle relative to the retaining track member first portion and such that the retaining track member second portion contacts the seal track.

### BRIEF DESCRIPTION OF THE DRAWINGS

Figure 1 is a schematic illustration of an exemplary gas turbine engine;
Figure 2 is a schematic end view of an exemplary stator vane assembly that may be used with the gas turbine engine shown in Figure 1;
Figure 3 is a cross-sectional view of a portion of the vane sector shown in Figure 2;
Figure 4 is a schematic view of an exemplary tool that may be used to couple a seal to the portion of the vane sector shown in Figure 3;
Figure 5(a) is a front perspective view of the tooling assembly that may be used with the tool shown in Figure 4;
Figure 5(b) is a rear perspective view of the tooling assembly that may be used with the tool shown in Figure 4;
Figure 5(c) is a front view of the tooling assembly that may be used with the tool shown in Figure 4; and
Figure 6 is a schematic view of the tool shown in Figure 4 engaged with the portion of the vane sector shown in Figure 3.

### DETAILED DESCRIPTION OF THE INVENTION

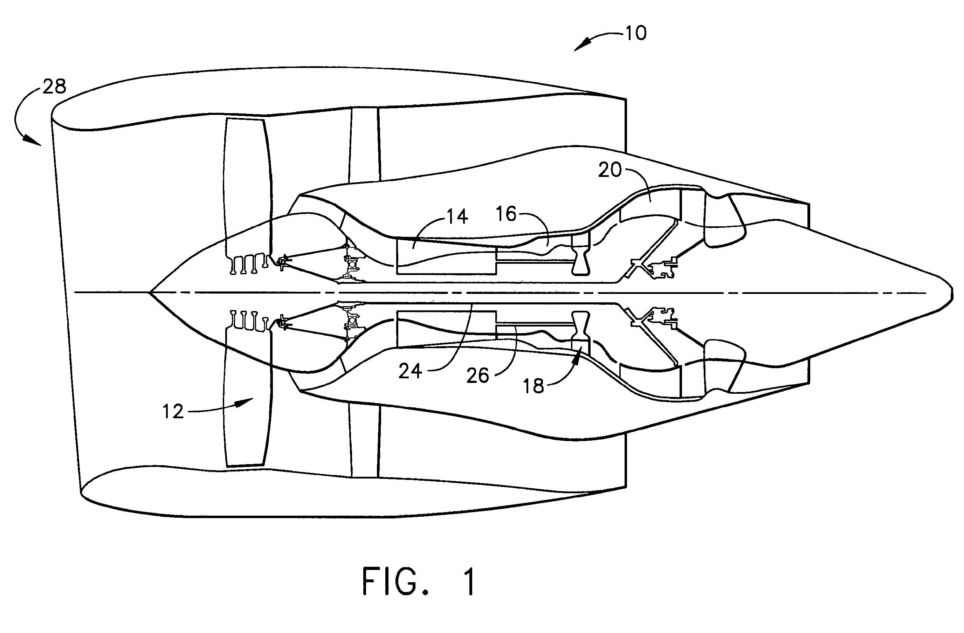

Figure 1 is a schematic illustration of an exemplary gas turbine engine 10. Engine 10 includes a low pressure compressor 12, a high pressure compressor 14, and a combustor assembly 16. Engine 10 also includes a high pressure turbine 18, and a low pressure turbine 20 arranged in a serial, axial flow relationship. Compressor 12 and turbine 20 are coupled by a first shaft 24, and compressor 14 and turbine 18 are coupled by a second shaft 26.

In operation, air flows through low pressure compressor 12 from an upstream side 28 of engine 10. Compressed air is supplied from low pressure compressor 12 to high pressure compressor 14. Compressed air is then delivered to combustor assembly 16 where it is mixed with fuel and ignited. Combustion gases are channeled from combustor 16 to drive turbines 18 and 20.

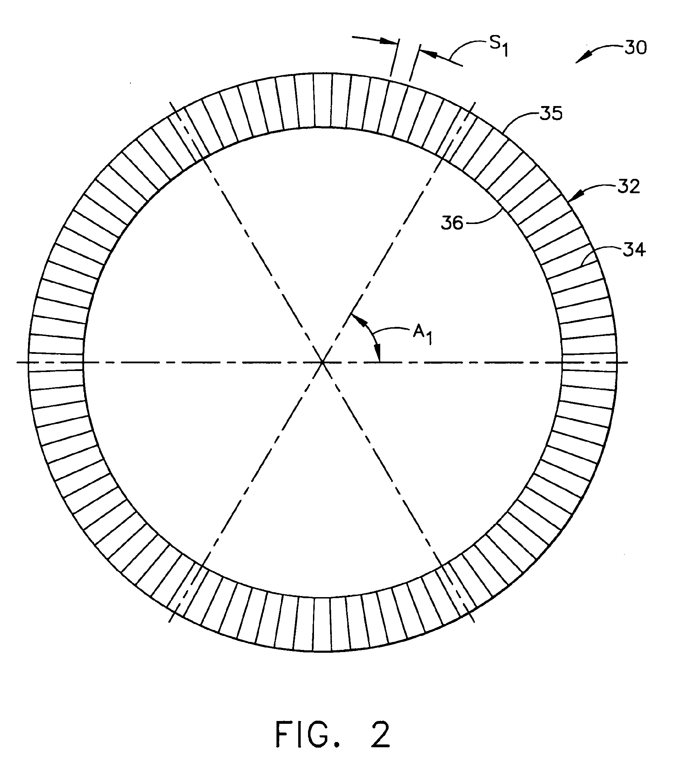

Figure 2 is a schematic end view of an exemplary stator vane assembly 30 that may be used with gas turbine engine 10 (shown in Figure 1). High pressure compressor 14 defines an annular flow path therethrough and includes at least one rotor disk (not shown) that includes a plurality of circumferentially-spaced, rotor blades (not shown) that extend radially outward therefrom. Stator vane assembly 30 is coupled adjacent to, and downstream from, the rotor disk. In the exemplary embodiment, stator vane assembly 30 includes six circumferentially-spaced stator vane sectors 32, wherein each stator vane sector 32 includes sixteen circumferentially-spaced stator vanes 34. Stator vane sectors 32 are coupled circumferentially within engine 10. Accordingly, in the exemplary embodiment, stator vane assembly 30 includes a total of ninety six stator vanes 34 that are arranged with a substantially uniform circumferential or pitch spacing S₁ defined between each pair of adjacent stator vanes 34 within stator vane assembly 30. In the exemplary embodiment, each stator vane sector 32 extends arcuately with a radial arc A₁ of approximately 60°. Each stator vane sector 32 also includes an inner arc 36 that is radially inward from stator vanes 34 and an outer arc 35 that is radially outward from stator vanes 34.

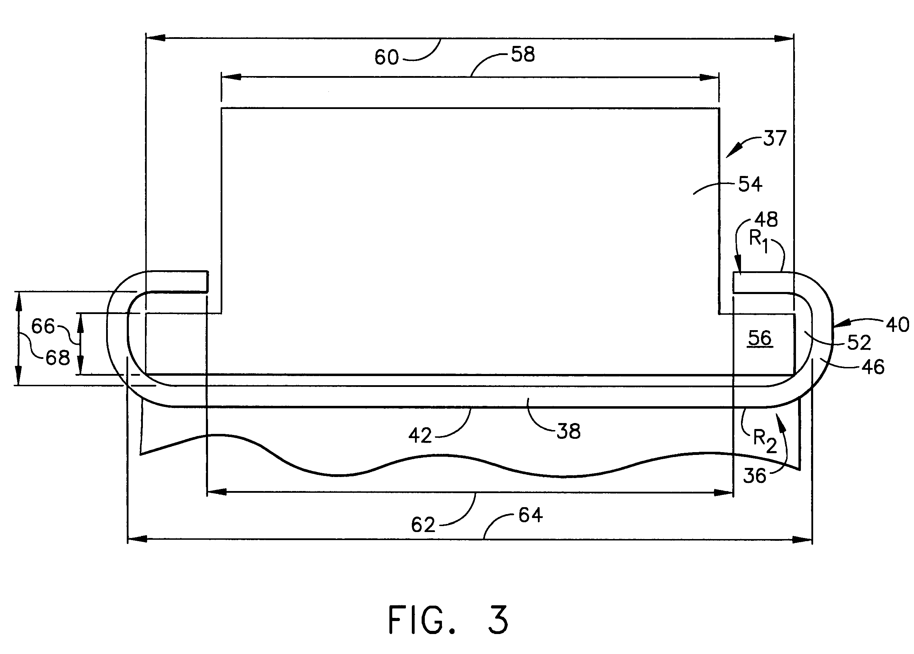

Figure 3 is a cross-sectional view of a portion of vane sector 32. Specifically, Figure 3 illustrates a portion of inner arc 36 including a honeycomb seal 37 inserted therein. Inner arc 36 includes a radially inward portion 38 and at least one retaining track member 40. A radially inward surface 42 of portion 38 is coupled adjacent to vane sector stator vanes 34. Retaining track member 40 includes a pair of opposed first portions 46 and a pair of opposed second portions 48 that each extend outwardly from, and are formed integrally with, portion 46. In the exemplary embodiment, each first portion 46 is substantially perpendicular to inward portion 38 and each second portion 48 is substantially parallel to inward portion 38. Accordingly retaining track member 40 and portion 38 define a track cavity 52.

Seal 37 is a honeycomb seal that is fabricated with a sealing portion 54 and a seal track 56. In the exemplary embodiment, sealing portion 54 has a width 58 that is narrower than a width 60 of seal track 56. Seal 37 is coupled to inner arc 36 such that at least one retaining track member 40 can be crimped against seal track 56, as described in more detail below, to facilitate securing seal 37 within vane sector 32. Sealing portion width 58 is narrower than an entrance width 62 of cavity 52 defined between opposed second portions 48. Moreover, seal track width 60 is narrower than width 64 defined between opposed first portions 46. In addition, a height 66 of seal track 56 is shorter than a corresponding height 68 of track cavity 52 as defined by second portions 48, and as such, sealing track 56 is sized for insertion into track cavity 52.

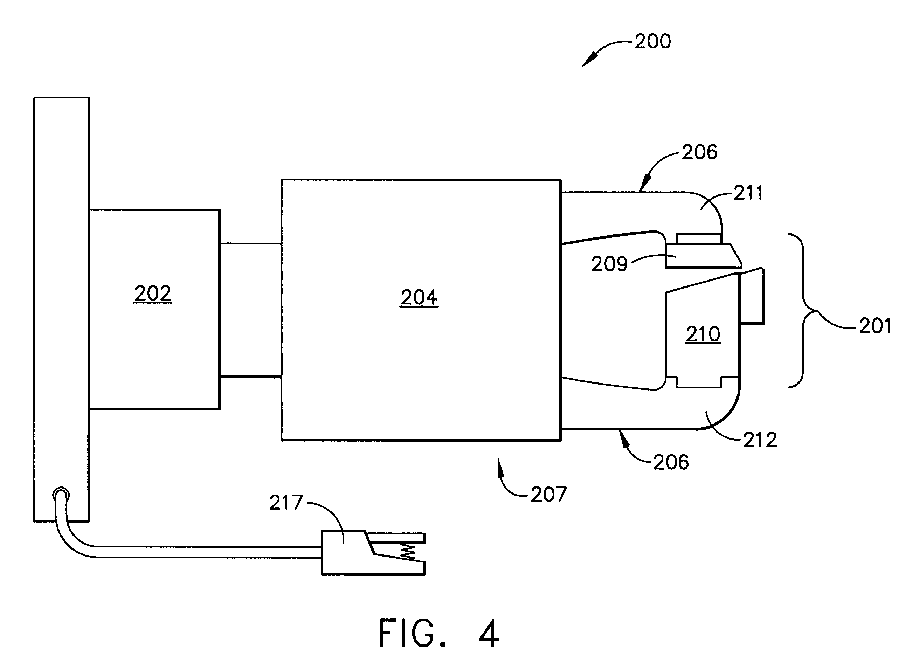

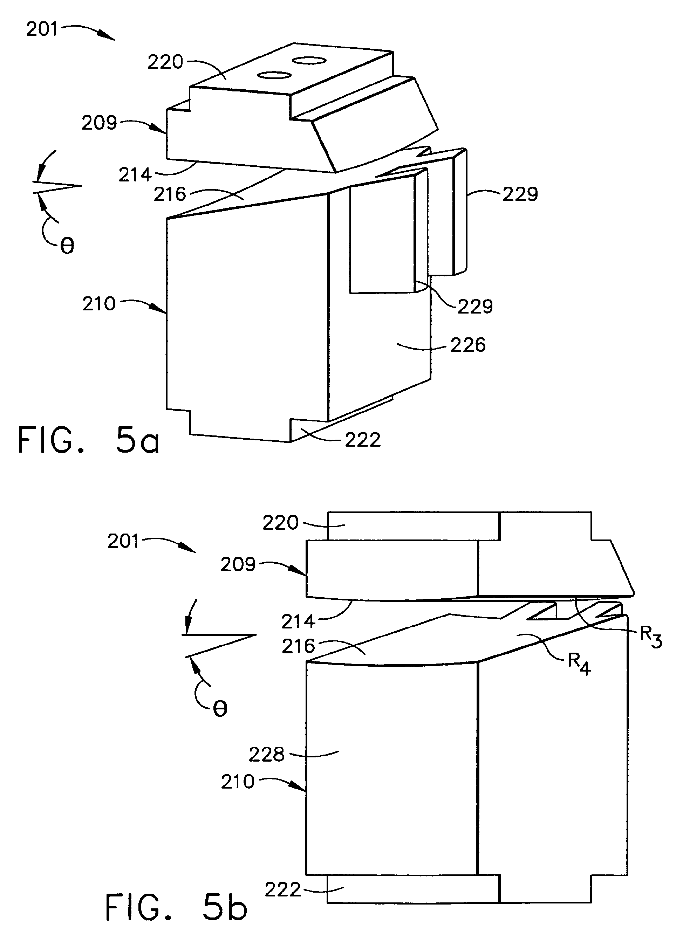

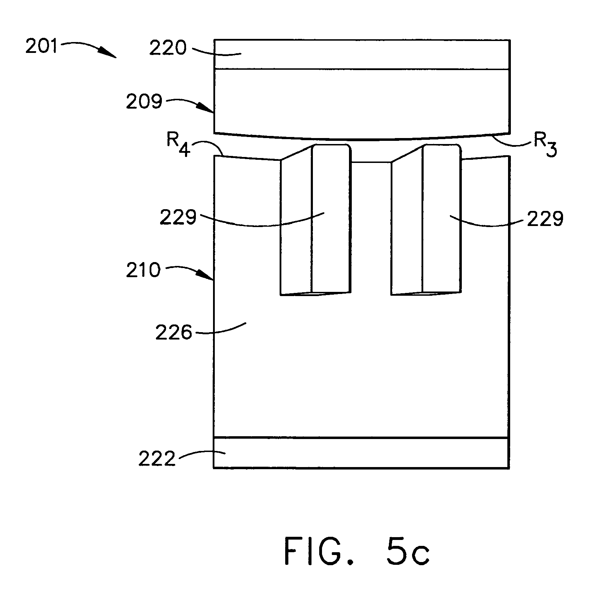

Figure 4 is a schematic view of an exemplary tool 200 used to couple seal 37 to vane sector 32 (shown in Figure 3), and more specifically to inner arc 36 (shown in Figure 3). Figures 5(a-c) are each respective views of an exemplary tooling assembly 201 that may be used with tool 200. Figure 5(a) is a perspective front view of tooling assembly 201, Figure 5(b) is a perspective rear view of tooling assembly 201, and Figure 5(c) is a front view of tooling assembly 201. In one embodiment, tool 200 may be a Series PNC Clamp commercially available from by PHD, Inc., Fort Wayne, Indiana. Tool 200 includes a base 202 that securely couples tool 200 to a fixture, such as a table or a wall. In an alternative embodiment, base 202 rotatably couples tool 200 to a fixture. Tool 200 also includes a body 204 that extends from base 202. A pair of jaws 206 are hingedly secured to body 204 at a distal end 207 of tool 200. Tooling assembly 201 couples to jaws 206 to enable tooling assembly 201 to crimp retaining track members 40 received within jaws 206. Specifically, tooling assembly 201 includes a first portion 209 and a second portion 210, and jaws 206 include an upper jaw 211 that is configured to couple to first portion 209 and a lower jaw 212 that is configured to couple to second portion 210.

Retaining track member second portion 48 is arcuate and is formed with a first radius R₁ and radially inward surface 42 is arcuate and is formed with a second radius R₂. In one embodiment, a clamping surface 214 of first portion 209 is formed with a radius R₃ that is approximately one thousandth of a degree less than radius R₁ of retaining track member second portion 48. Furthermore, a clamping surface 216 of second portion 210 is formed with a radius R₄ that is approximately one thousandth of a degree greater than radius R₂ of radially inward surface 42.

In the exemplary embodiment, a first coupling portion 220 of tooling assembly 201 is formed unitarily with tooling assembly first portion 209, and is sized for insertion into upper jaw 211. Similarly, a second coupling portion 222 of tooling assembly 201 is formed unitarily with tooling assembly second portion 210, and sized for insertion into lower jaw 212.

First portion clamping surface 214 is arcuate and is formed with a radius R₃. Radius R₃ is approximately one thousandth of a degree less than retaining track member second portion radius R₁. Furthermore, second portion clamping surface 216 is formed with a radius R₄ that is approximately one thousandth of a degree greater than radially inward surface radius R₂. Clamping surfaces 214 and 216 facilitate accommodating the varying radii between retaining track member second portion 48 and radially inward surface 42. Moreover, clamping surface 216 is disposed at, and closes at, an angle θ to facilitate preventing distortion of inner arc 36. Specifically a second portion front surface 226 is taller than a second portion rear surface 228, such that clamping surface 216 slopes away from front surface 226 towards rear surface 228 at an angle θ.

Tooling assembly second portion 210 also includes a pair of flanges 229 that extend outward from a front surface 226 of tooling assembly second portion 210. Flanges 229 facilitate supporting vane sector 32 while inserted into tooling assembly 201.

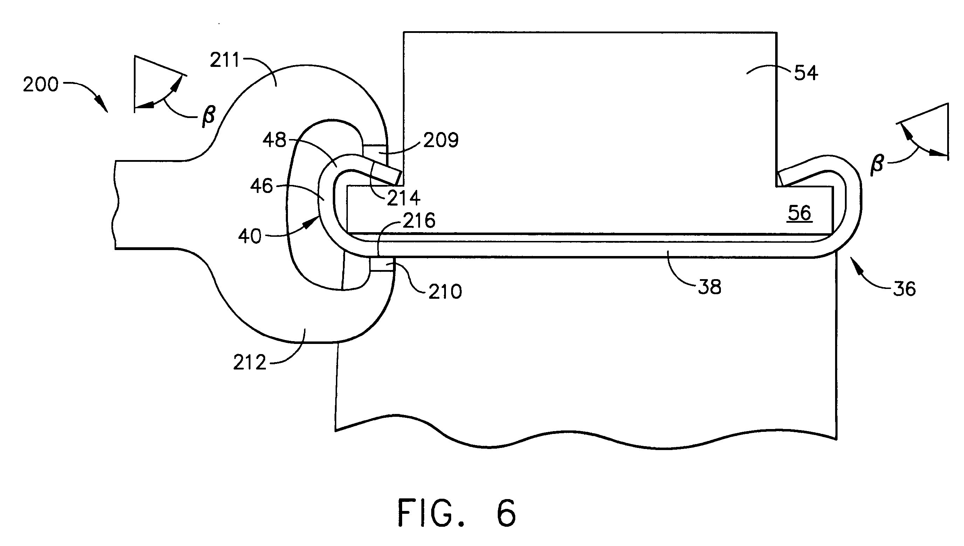

Figure 6 is a schematic view of tool 200 engaged with a portion of vane sector 32. During use tooling assembly first portion 209 engages retaining track member second portion 48 and tooling assembly second portion 210 engages radially inward portion 38. As first portion 209 is moved downward towards tooling assembly second portion 210, retaining track member second portion 48 is crimped to an angle β defined by retaining track member first portion 46. In one embodiment angle β is between approximately 30-60°. As second portion 48 is crimped against seal track 56, honeycomb seal 37 is secured within vane sector 32

Prior to operating tool 200, honeycomb seal 37 is inserted into vane sector 32 such that seal track 56 is retained in track cavity 52, and is positioned between retaining track member second portion 48 and radially inward portion 38. A section of vane sector 32 is inserted into tool 200 such that tooling assembly first portion 209 engages retaining track member second portion 48 and tooling assembly second portion 210 engages radially inward surface 42. Vane sector 32 is then supported by positioning radially inward portion 38 upon flanges 229.

In the exemplary embodiment, tool 200 is activated using a foot pedal 217. In the exemplary embodiment, foot pedal 217 is a five-way two-position pedal which actuates a pneumatic valve (not shown). Foot pedal 217 enables an operator to switch tool 200 between powered closed and power open cycles. Foot pedal 217 also allows an operator to open or close jaws 206 while leaving both hands free to manipulate vane sector 32.

Using foot pedal 217, the operator selects a first position of foot pedal 217 to operate the power close cycle of tool 200. By depressing foot pedal 217 the user can begin crimping seal 37 to vane sector 32. In the exemplary embodiment, a pneumatic or hydraulic differential motor (not shown), housed within body 204, drives a piston (not shown) attached to a mechanical linkage (not shown). In an alternative embodiment, the tool may be driven by other means, including, but not limited to, an electric motor. Both the piston and the mechanical linkage are also housed within body 204. Driving the mechanical linkage closes jaws 206 to facilitate closing tooling assembly 201 upon vane sector 32.

Specifically, tooling assembly first portion 209 engages retaining track member second portion 48 and tooling assembly second portion 210 engages radially inward portion 38. Tooling assembly first portion 209 moves downward towards tooling assembly second portion 210, during which time, tooling assembly 201 forces retaining track member second portion 48 into contact with seal track 56 of honecomb seal 37. Accordingly, seal track 56 is secured between retaining track member 40 and radially inward portion 38 to facilitate securing honeycomb seal 37 within vane sector 32.

The radii of tooling assembly first portion clamping surface 214 and tooling assembly second portion clamping surface 216 allow first portion 209 and second portion 210 to maintain substantially congruent lines of contact upon both retaining track member second portion 48 and radially inward portion 38. Specifically, tooling assembly 201 is designed to account for the varying radii between retaining track member second portion 48 and radially inward surface 42 to facilitate preventing bending moments from being placed on vane sector 32 which would crack the brittle braze joints which hold vane sector 32 together. Tooling assembly 201 also facilitates preventing undesirable marring of vane sector 32. Moreover, the angled closing of tooling assembly first portion 209 prevents distortion of inner arc 36.

After retaining track member 40 has been crimped upon seal track 56, the operator uses a second position of foot pedal 217 to operate tool 200 in an open cycle. The open cycle drives the motor in an opposite direction of the powered closing cycle, causing the mechanical linkage to open jaws 206. When jaws 206 are opened, the operator removes the first section of vane sector 32 and selects a second section of vane sector 32, adjacent the first section, to have a seal crimped therein. The second section of vane sector 32 is inserted into tooling assembly 201 in the same fashion as the first section. Using the foot pedal the crimping process is repeated. The operator repeats these steps until the entire length of retaining track member 40 has been closed in contact with the entire length of seal track 56. The process is then repeated on the opposite side of vane sector 32 to close the opposing side of retaining track member 40 onto seal track 56. When both sides of retaining track member 40 have been closed onto seal track 56 along the entire length of inner arc 36, seal 37 will be properly secured to vane sector 32.

The above-described methods and apparatus allow an operator to efficiently crimp a honeycomb seal onto a vane sector of a gas turbine engine. The efficiency of crimping is increased, in comparison to known honeycomb seal attachment means, because the need for a ball peen hammer and a non-marring block is eliminated by the present invention. As such, the likelihood of errors and the amount of physical effort that must be exerted by an operator are each facilitated to be reduced. Furthermore, the above-described tool enables a more uniform honeycomb seal to be crimped into a vane sector without abnormal stresses to the brittle brazed joints. By reducing the potential for error and decreasing the time required to crimp a vane sector, the present invention provides a more reliable and less costly alternative to known honeycomb crimping methods.

As used herein, an element or step recited in the singular and proceeded with the word "a" or "an" should be understood as not excluding plural said elements or steps, unless such exclusion is explicitly recited. Furthermore, references to "one embodiment" of the present invention are not intended to be interpreted as excluding the existence of additional embodiments that also incorporate the recited features.

Although the methods and systems described herein are described in the context of crimping a honeycomb seal to the vane sector of a gas turbine engine, it is understood that the crimping methods and systems described herein are not limited to honeycomb seals or gas turbine engines. Likewise, the crimping tool components illustrated are not limited to the specific embodiments described herein, but rather, components of the crimping tool can be utilized independently and separately from other components described herein.

While the invention has been described in terms of various specific embodiments, those skilled in the art will recognize that the invention can be practiced with modification within the scope of the claims.

## Claims

1. A method for assembling a gas turbine engine (10), said method comprising:
providing a vane sector (32) including a radially inward portion (38) and at least one retaining track member (40) coupled to the radially inward portion wherein the at least one retaining track member includes a first portion (46) that is substantially perpendicular to the radially inward portion and a second portion (48) that is substantially perpendicular to the first portion and is substantially parallel to the radially inward portion;
providing a honeycomb seal (37) including a sealing portion (54) and a seal track (56); and
coupling the honeycomb seal (37) to the vane sector (32) utilizing an hydraulic tool (200) by crimping the at least one retaining track member (40) using the hydraulic tool to facilitate positioning the retaining track member second portion at an acute angle (β) relative to the retaining track member first portion and such that the retaining track member second portion contacts the seal track.

2. A method in accordance with Claim 1 wherein the sealing portion has a first width (58) and the seal track has a second width (60) that is different than the sealing portion first width.

3. A method in accordance with Claim 1 or 2 wherein the sealing portion (54) and the seal track (56) are formed unitarily, wherein the sealing portion (54) has a first width and the seal track (56) has a second width that is wider than the sealing portion first width.

4. A method in accordance with Claim 1, 2 or 3 wherein the hydraulic tool (200) includes a tooling assembly (201) including a first portion (209) and a second portion (210), said method further comprises:
coupling the tooling assembly first portion (209) to the retaining track member second portion;
coupling the tooling assembly second portion (210) to the vane sector radially lower portion; and
crimping the retaining track member (40) with the hydraulic tool (200).

5. A method in accordance with any preceding Claim further comprising utilizing a foot pedal (217) to control operation of the hydraulic tool.

6. A method in accordance with Claim 5 wherein the vane sector inward portion is formed with a first radius (R₂) and the retaining track member second portion is formed with a second radius (R₁), the tooling assembly first portion is formed with a radius (R₃) less than the retaining track member second portion radius and the tooling assembly second portion is formed with a radius (R₄) greater than the vane sector radially inward portion radius, said method further comprising coupling the tooling assembly first portion to the retaining track member second portion and coupling the tooling assembly second portion to the vane sector radially inward portion to facilitate crimping the at least one retaining track member onto the seal track with the hydraulic tool to facilitate securing the seal within the vane sector.

## Patentansprüche

1. Verfahren für die Montage eines Gasturbinentriebwerks (10), wobei dieses Verfahren umfasst:
das Bereitstellen eines Schaufel-Sektors (32) mit einem radial einwärts liegenden Abschnitt (38) und zumindest einem Rückhaltenutelement (40), das mit dem radial einwärts liegenden Abschnitt gekoppelt ist, wobei das zumindest eine Rückhaltenutelement einen ersten Abschnitt (46) umfasst, der im Wesentlichen senkrecht zu dem radial einwärts liegenden Abschnitt verläuft, und einen zweiten Abschnitt (48), der im Wesentlichen senkrecht zu dem ersten Abschnitt und im Wesentlichen parallel zu dem radial einwärts liegenden Abschnitt verläuft;
das Bereitstellen einer Wabendichtung (37) mit einem Dichtungsteil (54) und einer Dichtungsführung (56) und
die Kopplung der Wabendichtung (37) an den Schaufel-Sektor (32) unter Verwendung eines Hydraulikwerkzeugs (200), indem das zumindest eine Rückhalte-Führungselement (40) unter Verwendung des Hydraulikwerkzeugs gecrimpt wird, um die Positionierung des zweiten Rückhalte-Führungselement-Abschnitts in einem spitzen Winkel (P) relativ zu dem ersten Abschnitt des Führungselements und derart, dass der zweite Abschnitt des Rückhalte-Führungselements in Kontakt mit der Dichtungsführung ist, zu ermöglichen.

2. Verfahren nach Anspruch 1, wobei der Dichtungsabschnitt eine erste Breite (58) und die Dichtungsführung eine zweite Breite (60) aufweist, die von der ersten Breite des Dichtungsabschnitts verschieden ist.

3. Verfahren nach Anspruch 1 oder 2, wobei der Dichtungsabschnitt (54) und die Dichtungsführung (56) einheitlich ausgebildet sind, wobei der Dichtungsabschnitt (54) eine erste Breite aufweist und die Dichtungsführung (56) eine zweite Breite aufweist, die größer als die erste Breite des Dichtungsabschnitts ist.

4. Verfahren nach Anspruch 1, 2 oder 3, wobei das Hydraulikwerkzeug (200) eine Werkzeug-Baugruppe (201) mit einem ersten (209) und einem zweiten Teil (210) umfasst und das Verfahren ferner umfasst:
das Koppeln des ersten Teils (209) der Werkzeug-Baugruppe mit dem zweiten Teil des Rückhalte-Führungselements,
das Koppeln des zweiten Teils (210) der Werkzeug-Baugruppe mit dem radial unteren Abschnitt des Schaufel-Sektors und
das Crimpen des Rückhalte-Führungselements (40) mit dem Hydraulikwerkzeug (200).

5. Verfahren nach den vorangehenden Ansprüchen, ferner die Verwendung eines Fußpedals (217) zur Steuerung des Betriebs des Hydraulikwerkzeugs umfassend.

6. Verfahren nach Anspruch 5, wobei der Innenabschnitt des Schaufel-Sektors mit einem ersten Radius (R₂) ausgebildet ist und der zweite Abschnitt des Rückhalte-Führungselements mit einem zweiten Radius (R₁) ausgebildet ist, der erste Teil der Werkzeug-Baugruppe mit einem Radius (R3) ausgebildet ist, der kleiner ist als der Radius des zweiten Abschnitts des Rückhalte-Führungselements, und der zweite Teil der Werkzeug-Baugruppe mit einem Radius (R4) ausgebildet ist, der größer ist als der Radius des radial einwärts liegenden Teils des Schaufel-Sektors, wobei das Verfahren ferner umfasst:
das Koppeln des ersten Teils der Werkzeug-Baugruppe mit dem zweiten Abschnitt des Rückhalte-Führungselements, das Koppeln des zweiten Teils der Werkzeug-Baugruppe an den radial einwärts liegenden Teils des Schaufel-Sektors, um das Crimpen des zumindest einen Rückhalte-Führungselements auf die Dichtungsführung mit dem Hydraulikwerkzeug zu ermöglichen, um die sichere Befestigung der Dichtung in dem Schaufel-Sektor zu ermöglichen.

## Revendications

1. Procédé d'assemblage d'un moteur à turbine à gaz (10), ledit procédé comprenant :
la fourniture d'une vanne secteur (32) comprenant une partie (38) radiale orientée vers l'intérieur et au moins un élément (40) de rail de retenue couplé à la partie radiale orientée vers l'intérieur dans lequel l'au moins un élément de rail de retenue comprend une première partie (46) qui est sensiblement perpendiculaire à la partie radiale orientée vers l'intérieur et une deuxième partie (48) qui est sensiblement perpendiculaire à la première partie et sensiblement parallèle à la partie radiale orientée vers l'intérieur ;
la fourniture d'un joint alvéolaire (37) comprenant une partie (54) de scellement et un rail (56) de scellement ; et
le couplage du joint alvéolaire (37) à la vanne secteur (32) à l'aide d'un outil hydraulique (200) en sertissant l'au moins un élément (40) de rail de retenue à l'aide de l'outil hydraulique pour permettre le positionnement de la deuxième partie de l'élément de rail de retenue à un angle aigu (β) par rapport à la première partie de l'élément de rail de retenue et de telle sorte que la deuxième partie de l'élément de rail de retenue entre en contact avec le rail de scellement.

2. Procédé selon la revendication 1 dans lequel la partie de scellement a une première largeur (58) et le rail de scellement a une deuxième largeur (60) qui est différente de la première largeur de la partie de scellement.

3. Procédé selon la revendication 1 ou 2 dans lequel la partie (54) de scellement et le rail (56) de scellement font partie intégrante l'un de l'autre, dans lequel la partie (54) de scellement a une première largeur et le rail (56) de scellement a une deuxième largeur qui est supérieure à la première largeur de la partie de scellement.

4. Procédé selon la revendication 1, 2 ou 3 dans lequel l'outil hydraulique (200) comprend un ensemble (201) d'outillage comprenant une première partie (209) et une deuxième partie (210), ledit procédé comprenant en outre :
le couplage de la première partie (209) de l'ensemble d'outillage à la deuxième partie de l'élément de rail de retenue ;
le couplage de la deuxième partie (210) de l'ensemble d'outillage à la partie inférieure radiale de la vanne secteur ; et
le sertissage de l'élément (40) de rail de retenue avec l'outil hydraulique (200).

5. Procédé selon l'une des revendications précédentes comprenant en outre l'utilisation d'une pédale (217) à pied pour commander le fonctionnement de l'outil hydraulique.

6. Procédé selon la revendication 5 dans lequel la partie orientée vers l'intérieur de la vanne secteur est constituée d'un premier rayon (R₂) et la deuxième partie de l'élément de rail de retenue est constituée d'un deuxième rayon (R₁), la première partie de l'ensemble d'outillage est constituée d'un rayon (R₃) inférieur au rayon de la deuxième partie de l'élément de rail de retenue et la deuxième partie de l'ensemble d'outillage est constituée d'un rayon (R₄) supérieur au rayon de la partie radiale orientée vers l'intérieur de la vanne secteur, ledit procédé comprenant en outre le couplage de la première partie de l'ensemble d'outillage à la deuxième partie de l'élément de rail de retenue et le couplage de la deuxième partie de l'ensemble d'outillage à la partie radiale orientée vers l'intérieur de la vanne secteur pour permettre le sertissage du au moins un élément de rail de retenue sur le rail de scellement avec l'outil hydraulique afin de permettre la fixation du scellement dans la vanne secteur.
